# EUROPÄISCHE PATENTSCHRIFT

(11) **EP 3 601 823 B1**
(45) Veröffentlichungstag und Bekanntmachung des Hinweises auf die Patenterteilung: **16.06.2021**
(21) Anmeldenummer: 18714675.8
(22) Anmeldetag: 02.03.2018
(51) Int. Cl.: F16C 33/58, F16C 33/60, F16C 33/66, F16C 33/78, F16J 15/3212, F16J 15/3216, F16J 15/3224, F16J 15/3268

(54) **ABGEDICHTETES WÄLZLAGER**
SEALED ROLLER BEARING
PALIER À ROULEMENT ÉTANCHE

(30) Priorität: 31.03.2017 DE 102017107005
(43) Veröffentlichungstag der Anmeldung: 05.02.2020
(73) Patentinhaber: Schaeffler Technologies AG & Co. KG, 91074 Herzogenaurach (DE)
(72) Erfinder: RETTINGER, Manuel, 97714 Oerlenbach (DE); NEUKIRCHNER, Jörg, 97502 Euerbach (DE)
(86) Internationale Anmeldenummer: PCT/DE2018/100188
(87) Internationale Veröffentlichungsnummer: WO 2018/177459

(56) Entgegenhaltungen:
- DE-T5-112015 001 129
- US-A- 4 043 620
- US-A- 4 544 168
- US-A1- 2010 308 594

## Beschreibung

Die Erfindung betrifft ein abgedichtetes Wälzlager, welches als zweireihiges Kegelrollenlager ausgebildet ist und beispielsweise als Rotorwellenlager einer Windkraftanlage genutzt werden kann. Dieses Wälzlager weist einen ersten Innenring, einen zweiten Innenring und einen koaxial über diesen beiden Innenringen angeordneten Außenring auf, wobei radial zwischen den beiden Innenringen und dem Außenring Wälzkörper in zwei Wälzkörperreihen angeordnet sind, bei dem die Wälzkörper der ersten Wälzkörperreihe auf einer ersten Innenringlaufbahn sowie einer ersten Außenringlaufbahn und die Wälzkörper der zweiten Wälzkörperreihe auf einer zweiten Innenringlaufbahn und einer zweiten Außenringlaufbahn abrollen, bei dem die Wälzkörper in zumindest einem Wälzkörperkäfig angeordnet sind, und bei dem ein Lagerinnenraum zumindest teilweise mit einem Schmiermittel befüllt ist.

Wälzlager dienen bekanntermaßen zur reibungsarmen Lagerung von drehbaren Maschinenelementen. Im Bereich von Windkraftanlagen dienen Großwälzlager unter anderem zur Lagerung der Rotorwelle. Zur kostengünstigen Fertigung derartiger Großwälzlager können neuere Fertigungstechnologien, wie zum Beispiel das induktive Härten, genutzt werden. Das Induktionshärten erfordert jedoch eine möglichst einfache geometrische Gestalt der zu härtenden Flächen, was bei den heutigen Bauformen von Großwälzlagern nicht immer gegeben ist.

Bei bekannten Großwälzlagern kann es im Bereich von zur Abdichtung des Lagerinnenraumes verbauten Radialwellendichtringen vereinzelt zu Leckagen kommen. Ein Grund dafür liegt in dem von den bewegten Wälzkörpern verdrängten Schmiermittel beziehungsweise Lagerfett. Infolge eines pulsierenden Verdrängungseffektes wird das Lagerfett gegen die Dichtlippe des Radialwellendichtrings geschleudert, so dass hohe lokale Druckspitzen an der Dichtlippe entstehen, denen die Dichtlippe des Radialwellendichtrings nicht dauerhaft standhalten kann.

Ein Beispiel eines solchen gattungsgemäßen Wälzlagers zeigt US 4 043 620 A.

Der Erfindung liegt daher die Aufgabe zugrunde, ein Wälzlager insbesondere für Windkraftanwendungen vorzuschlagen, welches als Großwälzlager ausgebildet sein kann und eine vergleichsweise einfache, induktiv leicht zu härtende Lagerringgeometrie aufweist. Außerdem soll dieses Wälzlager so ausgebildet sein, dass ein unkontrollierter Austritt von Schmiermittel zuverlässig vermieden wird.

Die Lösung dieser Aufgabe wird mit einem Wälzlager erreicht, welches die Merkmale des Anspruchs 1 aufweist. Vorteilhafte Weiterbildungen sind in den abhängigen Ansprüchen definiert.

Demnach geht die Erfindung aus von einem abgedichteten Wälzlager, welches als zweireihiges Kegelrollenlager ausgebildet ist und beispielsweise als großes Hauptlager für die Rotorwelle einer Windkraftanlage genutzt werden kann. Dieses Wälzlager verfügt über einen ersten Innenring, einen zweiten Innenring und einen koaxial über diesen beiden Innenringen angeordneten Außenring, bei dem radial zwischen den beiden Innenringen und dem Außenring Wälzkörper in zwei Wälzkörperreihen angeordnet sind, bei dem die Wälzkörper der ersten Wälzkörperreihe auf einer ersten Innenringlaufbahn sowie einer ersten Außenringlaufbahn und die Wälzkörper der zweiten Wälzkörperreihe auf einer zweiten Innenringlaufbahn und einer zweiten Außenringlaufbahn abrollen, bei dem die Wälzkörper in zumindest einem Wälzkörperkäfig angeordnet sind, und bei dem ein Lagerinnenraum zumindest teilweise mit einem Schmiermittel befüllt ist.

Zur Lösung der gestellten Aufgabe ist bei diesem Wälzlager vorgesehen, dass an einem Axialvorsprung des ersten Innenrings radial außen ein Zusatzring angeordnet ist, dass der Zusatzring radial außen einen Radialwellendichtring trägt, und dass eine radial auswärts gerichtete Dichtlippe des Radialwellendichtrings an einer zylindrischen Innendichtfläche einer mit dem Außenring verbundenen Axialverlängerung radial anliegt.

Durch diesen konstruktiven Aufbau ist eine vergleichsweise große Distanz zwischen dem Radialwellendichtring und den Wälzkörpern des Wälzlagers gegeben, so dass die Druckbelastung der Dichtlippe des Radialwellendichtrings durch hydraulische Verdrängungseffekte des Schmiermittels infolge der abrollenden Wälzkörper vergleichsweise gering und eine dortige Leckageneigung verringert ist.

Durch den als ein separates Bauteil ausgeführten Zusatzring weist der zweiteilige Innenring eine vergleichsweise einfache Geometrie auf, welche zu einer Verringerung des Fertigungsaufwands zur Folge hat. So fällt bei den spanenden Fertigungsschritten bei der Herstellung des Innenrings weniger Verschnitt an und induktive Härteprozesse lassen sich an den geometrisch einfach geformten Flächen leicht durchführen. Außerdem ist der für die Herstellung eines solchen Wälzlagers notwendige Volumenanteil an höherwertigem Wälzlagerstahl Kosten sparend verringert. Gemäß einer vorteilhaften Ausgestaltung ist vorgesehen, dass der Zusatzring einen Basiskörper mit einer im Wesentlichen viereckigen Querschnittsgeometrie aufweist, und dass an dem Basiskörper ein radial nach außen gerichteter Flansch ausgebildet ist, welcher mit einer axial einwärts orientierten ersten Stirnseite des Basiskörpers des Zusatzrings bündig abschließt. Hierdurch ist der Radialwellendichtring auf dem Zusatzring gegen eine axial einwärts erfolgende Verschiebebewegung lagegesichert.

Erfindungsgemäß ist vorgesehen, dass an einer stirnseitigen Außenfläche des ersten Innenrings eine Abschlussscheibe befestigt ist, und dass diese Abschlussscheibe bündig an einer axial auswärts gerichteten zweiten Stirnseite des Basiskörpers des Zusatzrings anliegt. Hierdurch ist der Radialwellendichtring auch in der zweiten Axialrichtung, also nach axial außen, lagegesichert am ersten Innenring befestigt.

Die Abschlussscheibe ist bevorzugt segmentiert ausgebildet, so dass deren Montage erleichtert ist. Zudem kann die Abschlussscheibe derart umfangsbezogen segmentiert ausgebildet sein, dass diese lediglich aus Kreisscheibensegmenten besteht. Solche Orte am Innenring beziehungsweise am Zusatzring, an denen die Durchgangsbohrungen für den Schmiermittelaustritt vorhanden sind, können dabei frei von solchen Kreisscheibensegmenten sein.

Erfindungsgemäß ist vorgesehen, dass in dem erwähnten Zusatzring und in der genannten Abschlussscheibe mindestens eine axiale Durchgangsbohrung ausgebildet ist. Hierdurch kann altes Schmiermittel dann kontrolliert aus dem Lagerinnenraum des Wälzlagers in die Umgebung austreten, wenn in den Lagerinnenraum neues Schmiermittel, zum Beispiel mittels einer Fettpresse zu Wartungszwecken eingebracht und das alte Schmiermittel von diesem verdrängt wird. Die Abschlussscheibe kann zum Beispiel mittels einer stoffschlüssigen Verbindung, einer magnetischen, einer Schraubverbindung oder dergleichen mit dem Zusatzring verbunden sein.

Gemäß einer günstigen Ausgestaltung ist vorgesehen, dass der Zusatzring auf dem Axialvorsprung des ersten Innenrings durch Aufschrumpfen befestigt ist. Hierdurch ist eine besonders zuverlässige, sich im Normalbetrieb des Großwälzlagers unter praktisch keinen Umständen lösende Befestigung des Zusatzrings auf dem ersten Innenring gegeben.

Anstelle eines solchen Schrumpfsitzes und Aufschrumpfen des Zusatzrings auf den Axialvorsprung des zugeordneten Innenrings kann zur axialen Sicherung des Zusatzrings vorgesehen sein, dass die Abschlussscheibe sowohl mit dem zugeordneten Innenring als auch mit dem Zusatzring verschraubt ist. Auch hierdurch wird eine zuverlässige Verbindung des Zusatzrings mit dem ersten Innenring erreicht. Diese Konstruktion kann mittels wenigstens einen O-Rings abgedichtet sein, welcher radial zwischen dem zugeordneten Innenring und dem Zusatzring angeordnet ist.

Gemäß einer anderen technisch vorteilhaften Ausgestaltung ist vorgesehen, dass der Radialwellendichtring einen ringförmigen Grundkörper mit einem in radialer Richtung beweglichen Steg aufweist, und dass dieser Steg in einen umlaufenden sowie die eine Dichtlippe ausbildenden Randabschnitt übergeht, in dem ein ringförmiges oder mäanderförmiges Spannelement aufgenommen ist. Hierdurch ist eine weiter optimierte Abdichtungswirkung gegenüber dem Schmiermittel gegeben. Durch das Spannelement, welches beispielsweise als eine umlaufende Schlauchfeder ausgebildet ist, wird der Randabschnitt des Grundkörpers des Radialwellendichtrings durch die Federkraft des Spannelements zusätzlich radial nach außen gegen die vorzugsweise gehärtete Innendichtfläche der Axialverlängerung des Außenrings beaufschlagt, wodurch eine vom Verschleißgrad der ersten Dichtlippe weitgehend unabhängige Abdichtungswirkung erzielt wird.

Eine andere vorteilhafte Ausgestaltung des erfindungsgemäßen Wälzlagers sieht vor, dass der Grundkörper des Radialwellendichtrings auf einer Außenumfangsfläche des Zusatzrings aufgenommen sowie zwischen der Abschlussscheibe und dem Flansch des Zusatzrings axial eingespannt ist. Hierdurch ist eine zuverlässige radiale Lagefixierung des Radialwellendichtrings auf dem Zusatzring gegeben. Darüber hinaus ergibt sich infolge der axialen Verspannung des Grundkörpers des Radialwellendichtrings eine zumindest geringfügige, jedoch vorteilhafte radiale Expansion desselben in Richtung zu der Innendichtfläche der Axialverlängerung des Außenrings.

Weiter ist bevorzugt vorgesehen, dass der Grundkörper, der Steg und der Randabschnitt mit der Dichtlippe des Radialwellendichtrings einstückig unter Nutzung eines elastischen Kunststoffs hergestellt sind. Aufgrund der geschilderten Materialkombination mit den nicht-elastomeren Bestandteilen des Radialwellendichtrings ergibt sich eine ausgezeichnete Abdichtungswirkung verbunden mit einer langen, wartungsfreien Nutzungsdauer des Radialwellendichtrings.

Weiter kann bei einem erfindungsgemäßen Wälzlager vorgesehen sein, dass zwischen der Axialverlängerung und dem Außenring ein Dichtelement angeordnet ist. Außerdem ist ein weiteres Dichtelement zwischen den beiden axial aneinander stoßenden Innenringen des abgedichteten Wälzlagers vorgesehen. Das Dichtelement kann zum Beispiel ein O-Ring oder als ein ringförmiges Dichtelement mit einer viereckigen Querschnittsgeometrie gebildet sein.

Zur Verbindung des Außenrings mit der Axialverlängerung sind diese von mindestens einer durchgehenden axialen Befestigungsbohrung durchsetzt, zur Verbindung derselben mittels einer geeigneten Schraubverbindung. Diese kann beispielsweise eine Zylinderschraube und eine darauf aufschraubbare Gewindemutter umfassen. Hierdurch ist eine einfache und zugleich robuste Anordnung des Radialwellendichtrings an dem Außenring des abgedichteten Großwälzlagers durch die seitlich angebrachte Axialverlängerung gegeben.

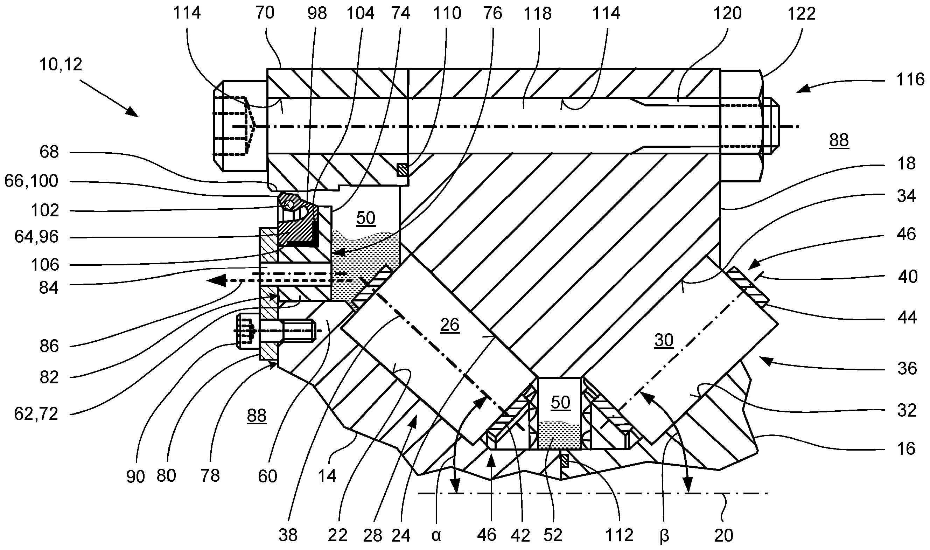

Die Erfindung wird nachfolgend an einem Ausführungsbeispiel weiter erläutert. Hierzu ist der Beschreibung eine Zeichnung beigefügt, deren einzige Figur einen schematischen Teillängsschnitt durch ein Großwälzlager mit den Merkmalen der Erfindung zeigt.

Das in der Figur dargestellte abgedichtete Großwälzlager 10 ist als ein zweireihiges Kegelrollenlager 12 für eine Windkraftanlage oder dergleichen ausgebildet. Es weist einen ersten Innenring 14 und einen zweiten Innenring 16 auf, welche axial eng aneinander angeordnet sind und von einem einstückigen Außenring 18 koaxial und radial außen umgeben sind. Die beiden Innenringe 14, 16 sowie der Außenring 18 sind rotationssymmetrisch zu einer Längsmittelachse 20 ausgebildet und angeordnet. Radial zwischen den beiden Innenringen 14, 16 und dem Außenring 18 sind in zwei Wälzkörperreihen 28, 36 Wälzkörper 26, 30 angeordnet, welche von jeweils einem Wälzkörperkäfig 42, 44 geführt werden.

Die Wälzkörper 26 der ersten Wälzkörperreihe 28 rollen auf einer ersten Innenringlaufbahn 22 und einer ersten Außenringlaufbahn 24 ab, während die Wälzkörper 30 der zweiten Wälzkörperreihe 36 auf einer zweiten Innenringlaufbahn 32 und einer zweiten Außenringlaufbahn 34 abrollen. Sowohl der Außenring 18 als auch die beiden Innenringe 14, 16 können erforderlichenfalls, unter anderem um die Fertigung, die Montage sowie die Wartung in einer Zielapplikation zu vereinfachen, zum Beispiel in Umfangsrichtung segmentiert ausgebildet sein.

Axial beiderseits der beiden Innenringlaufbahnen 22, 32 ist jeweils ein nicht bezeichneter Führungsbord zur axialen Führung der Wälzkörper 26, 30 integral an den jeweiligen Innenringen 14, 16 ausgebildet. Die beiden Außenringlaufbahnen 24, 34 sind hingegen bordfrei ausgebildet.

Zumindest die beiden Innenringe 14, 16 und der Außenring 18 sind aus einem hochvergüteten Wälzlagerstahl hergestellt. Die beiden Innenringlaufbahnen 22, 32 und die beiden Außenringlaufbahnen 24, 34 sind unter Einbeziehung der beiden Führungsborde an den Innenringlaufbahnen 22, 32 gehärtet ausgebildet. Der Härteprozess erfolgte aufgrund der hier gegebenen einfachen Oberflächengeometrie der Innenringe 14, 16 und des Außenrings 18 vorzugsweise mittels des sogenannten Induktionshärtens.

Die Wälzkörper 26, 30 sind vorzugsweise jeweils kegelstumpfförmig ausgebildet, wobei die Rotationsachse 38 der Wälzkörper 26 der ersten Wälzkörperreihe 28 jeweils unter einem ersten Winkel α von etwa 45° in Bezug zu der Längsmittelachse 20 geneigt angeordnet sind. Dem entsprechend ist die Rotationsachse 40 der Wälzkörper 30 der zweiten Wälzkörperreihe 36 entgegengesetzt zu dem ersten Winkel α um einen zweiten Winkel β in Bezug zur Längsmittelachse 20 geneigt angeordnet. Der zweite Winkel β ist bevorzugt in etwa genau so groß bemessen wie der erste Winkel a. Aufgrund der unter den Winkeln α, β entgegengesetzt angestellten Wälzkörperreihen 28, 36 vermag das Kegelrollenlager 12 sowohl große radiale Kräfte als auch bedeutende axiale Kräfte aufzunehmen, wie sie beispielsweise bei Lagerungen von Rotorwellen in Windkraftanlagen oder dergleichen auftreten.

Die Wälzkörper 26 der ersten Wälzkörperreihe 28 und die Wälzkörper 30 der zweiten Wälzkörperreihe 36 sind jeweils in dem ersten Wälzkörperkäfig 42 beziehungsweise in dem zweiten Wälzkörperkäfig 44 zumindest umfangsseitig zueinander beabstandet geführt, wobei diese beiden Wälzkörperkäfige 42, 44 gegebenenfalls segmentiert ausgeführt sind, um bei großen Abmessungen deren Montage zu erleichtern. Die beiden Wälzkörperkäfige 42, 44 können miteinander verbunden oder umfangsseitig unabhängig voneinander drehbar angeordnet sein, und sie verkörpern gemäß der hier gewählten Definition gemeinsam ein Wälzkörperkäfigsystem 46. Zur Minimierung der Lagerreibung, zur Geräuschdämpfung sowie um das Eindringen von Fremdpartikeln in den Lagerinnenraum 50 zu verhindern, ist der Lagerinnenraum 50 zumindest teilweise mit einem Schmiermittel 52 angefüllt. Bei dem Schmiermittel 52 handelt es sich bevorzugt um ein hochviskoses und im Wesentlichen nicht kompressibles Lagerfett.

Erfindungsgemäß ist an einem Axialvorsprung 60 des ersten Innenrings 14 ein massiver, näherungsweise hohlzylindrischer Zusatzring 62 befestigt. Der Axialvorsprung 60 kragt hierzu radial und axial auswärts etwas aus dem ersten Innenring 14 heraus und ist einstückig an diesem ausgebildet. Der Zusatzring 62 trägt radial außen einen Radialwellendichtring 64, dessen radial auswärts gerichtete Dichtlippe 66 an einer zylindrischen Innendichtfläche 68 einer mit dem Außenring 14 verbundenen Axialverlängerung 70 anliegt. Diese zylindrische Innendichtfläche 68 der Axialverlängerung 70 des Außenrings 14 ist gehärtet ausgeführt.

Der Basiskörper 72 des Zusatzrings 62 weist eine näherungsweise vieleckige Querschnittsgeometrie auf. An dem Basiskörper 72 ist ferner ein radial nach außen weisender Flansch 74 integral ausgebildet, der mit einer axial einwärts weisenden ersten Stirnseite 76 des Basiskörpers 72 axial bündig abschließt. Der Flansch 74 am Basiskörper 72 weist hier lediglich exemplarisch eine rechteckförmige Querschnittsgeometrie auf.

Durch den Zusatzring 62 wird im Vergleich zu bekannten technischem Lösungen der Abstand zwischen den Wälzkörpern 26 der ersten Wälzkörperreihe 28 und dem Radialwellendichtring 64 beträchtlich erhöht. Infolgedessen werden die von den Wälzkörpern 26, 30 aufgrund ihrer Bewegung innerhalb des Wälzlagers 10 beziehungsweise des Kegelrollenlagers 12 durch Verdrängungseffekte hervorgerufenen Druckstöße im Schmiermittel 52 bis zum Erreichen des Radialwellendichtrings 64 in ihrer Amplitude so stark bedämpft, dass erheblich weniger Leckagen im Bereich der Dichtlippe 66 des Radialwellendichtrings 64 auftreten als bei konventionellen Wälzlagern gleicher Bauart.

Der Zusatzring 62 und die Axialverlängerung 70 am Außenring 18 sind jeweils als separate Bauteile hergestellt, wodurch im Anschluss an spanende Fertigungsverfahren eine Oberflächenbehandlung, insbesondere in der Form von Schleifen, Polieren, Honen und Läppen, sowie das Härten der Innendichtfläche 68 der Axialverlängerung 70 unabhängig von einer Oberflächenbehandlung und/oder einem Härteprozess des Außenrings 18 erfolgen können. Dasselbe gilt für den Zusatzring 62 und den ersten Innenring 14. Aus Vorstehendem folgt eine beträchtliche Vereinfachung des gesamten Herstellungsprozesses des Kegelrollenlagers 12 und damit einhergehend ein erhebliches Kosteneinsparungspotential.

An einer ersten, in etwa kreisringförmigen, stirnseitigen Außenfläche 78 des ersten Innenrings 14 ist ferner eine im Wesentlichen hohlzylindrische Abschlussscheibe 80 bündig zu einer axial auswärts gerichteten zweiten Stirnseite 82 des Basiskörpers 72 des Zusatzrings 62 befestigt. In den Basiskörper 72 des Zusatzrings 62 sowie in die Abschlussscheibe 80 ist mindestens eine axiale Durchgangsbohrung 84 eingebracht, deren Durchmesser geeignet dimensioniert ist. Durch diese Durchgangsbohrung 84 kann das Schmiermittel 52, wie mit dem Pfeil 86 angedeutet, auf kontrollierte Weise aus dem Lagerinnenraum 50 in die Umgebung 88 außerhalb des Kegelrollenlagers 12 gelangen. Dies kann beispielsweise dann eintreten, wenn zu Wartungszwecken des Kegelrollenlagers 12 mittels einer Fettpresse oder einem ähnlichen Werkzeug neues, unverbrauchtes Schmiermittel 52 mit hohem Druck in den Lagerinnenraum 50 gepresst und hiermit einhergehend das alte Schmiermittel durch das neue Schmiermittel 52 zumindest teilweise verdrängt wird.

Die Befestigung der Abschlussscheibe 80 am ersten Innenring 14 erfolgt beispielsweise mittels mindestens eines Schraubbolzens 90. Alternativ dazu kann die Abschlussscheibe 80 mit dem ersten Innenring 14 auch durch eine Magnet- oder Klebeverbindung verbunden sein.

Der Zusatzring 62 ist vorzugsweise thermisch auf dem Axialvorsprung 60 des ersten Innenrings 14 aufgeschrumpft, wodurch unter praktisch allen auftretenden Betriebsbedingungen des Kegelrollenlagers 12 eine besonders zuverlässige Verbindung realisierbar ist, die zudem ohne zusätzliche Verbindungs- oder Befestigungselemente auskommt. Darüber hinaus erübrigt sich eine ansonsten vorzusehende, aufwendige Oberflächenbearbeitung des Axialvorsprungs 60 des ersten Innenrings 14 im Bereich des anzubringenden Zusatzrings 62.

Der Radialwellendichtring 64 verfügt über einen ringförmigen Grundkörper 96 mit einer näherungsweise viereckigen Querschnittsgeometrie. An den Grundkörper 96 des Radialwellendichtrings 64 ist ein dünner, radial auswärts gerichteter, beweglicher Steg 98 integral ausgebildet, der seinerseits in einen umlaufenden sowie die die Dichtlippe 66 ausbildenden Randabschnitt 100 übergeht. In dem kopfartigen, verdickten und kreisförmigen Randabschnitt 100 des Radialwellendichtrings 64 ist ein ringförmiges Spannelement 102 eingebettet, wodurch die Dichtlippe 66 radial nach außen, in Richtung zu der Innendichtfläche 68 der Axialverlängerung 70 mit einer Federkraft beaufschlagt ist. Infolgedessen ist eine vom aktuellen Verschleißzustand der Dichtlippe 66 weitestgehend unabhängige, ausgezeichnete Abdichtungswirkung des Radialwellendichtrings 64 gewährleistet. Das Spannelement 102 ist hierbei bevorzugt durch eine ringförmige beziehungsweise umfangsseitig innerhalb des Randabschnitts 100 umlaufende Schlauchfeder oder dergleichen realisiert.

Der Grundkörper 96 des Radialwellendichtrings 64 kann ferner ein optionales Verstärkungsprofil 104 aus einem Metall oder aus einem gegebenenfalls faserarmierten Kunststoff mit einer möglichst hohen Biegesteifigkeit aufweisen. Hierbei ist es möglich, das Verstärkungsprofil 104 allseitig in den Grundkörper 96 einzubetten. Alternativ dazu kann das Verstärkungsprofil 104 bereichsweise mit den dem Zusatzring 62 zugewandten Oberflächenabschnitten des Grundkörpers 96 bündig abschließend ausgebildet sein. Das Verstärkungsprofil 104 ist hier lediglich exemplarisch als ein rechtwinkliges Winkelprofil mit jeweils in etwa gleich langen Schenkeln ausgebildet.

Der Grundkörper 96 des Radialwellendichtrings 64 ist auf einer im Wesentlichen zylindrischen Außenumfangsfläche 106 des Zusatzrings 62 aufgenommen und vorzugsweise zwischen der Abschlussscheibe 80 und dem radial auswärts gerichteten Flansch 74 des Zusatzrings 62 axial eingespannt. Infolge der axialen Vorspannung des Grundkörpers 96 des Radialwellendichtrings 64 wird dieser aufgrund der ihm eigenen Elastizität zumindest geringfügig in radialer Richtung expandiert, wodurch sich eine weitere Optimierung der Abdichtungswirkung durch eine mit größerer Kraft anliegende Dichtlippe 66 einstellt.

Der Grundkörper 96, der Steg 98 sowie der Randabschnitt 100 mit der daran ausgeformten Dichtlippe 66 des Radialwellendichtrings 64 sind vorzugsweise einstückig aus einem elastischen Kunststoff gebildet, insbesondere mit einem Elastomer oder dergleichen. Als Elastomere kommen beispielsweise Silikone, Gummi oder Polyurethan in Betracht.

Zur weiteren Vervollständigung der Abdichtung des Kegelrollenlagers 12 ist zwischen der Axialverlängerung 70 und dem Außenring 18 ein Dichtelement 110 angeordnet. Außerdem ist zwischen den beiden axial aneinander stoßenden Innenringen 14, 16 ein Dichtelement 112 angeordnet. Die beiden genannten Dichtelemente 110, 112 können beispielsweise als konventionelle O-Ringe, als ringförmige Flachdichtungen mit einer viereckigen Querschnittsgeometrie oder dergleichen ausgebildet sein.

Der Außenring 16 sowie die Axialverlängerung 70 sind von mindestens einer axial durchgehenden, zylindrischen Befestigungsbohrung 114 zur mechanisch festen Verbindung mittels einer hier lediglich schematisch angedeuteten Schraubverbindung 116 durchsetzt. Die Schraubverbindung 116 ist hier beispielhaft durch einem Schraubbolzen 118 und einer auf dessen endseitigem Gewindeabschnitt 120 aufgeschraubten Mutter 122 realisiert. Um eine zuverlässige und mechanisch hinreichend belastbare Verbindung zwischen dem Außenring 18 und der Axialverlängerung 70 zu gewährleisten, ist eine Vielzahl von solchen Schraubverbindungen umfangsseitig gleichmäßig zueinander beabstandet vorgesehen.

Das in der einzigen Figur dargestellte Wälzlager 10 beziehungsweise das Kegelrollenlager 12 kann auf der Seite des zweiten Innenringes 16 ebenso ausgebildet sein wie im Bereich des ersten Innenrings 14. Auf einem Axialvorsprung des zweiten Innenrings 14 wäre dann zweiter Zusatzring befestigt, welcher einen zweiten Radialwellendichtring tragen würde. Dieser zweite Radialwellendichtring wäre dann identisch ausgebildet wie der Radialwellendichtring im Bereich des ersten Innenrings 12, und er würde beispielsweise an einer zweiten Axialverlängerung des Außenrings 18 abdichtend anliegen.

### Bezugszeichen

- 10: Wälzlager, Großwälzlager
- 12: Kegelrollenlager
- 14: Erster Innenring
- 16: Zweiter Innenring
- 18: Außenring
- 20: Längsmittelachse
- 22: Erste Innenringlaufbahn
- 24: Erste Außenringlaufbahn
- 26: Wälzkörper der ersten Wälzkörperreihe
- 28: Erste Wälzkörperreihe
- 30: Wälzkörper der zweiten Wälzkörperreihe
- 32: Zweite Innenringlaufbahn
- 34: Zweite Außenringlaufbahn
- 36: Zweite Wälzkörperreihe
- 38: Rotationsachse der Wälzkörper 26
- 40: Rotationsachse der Wälzkörper 30
- 42: Erster Wälzkörperkäfig
- 44: Zweiter Wälzkörperkäfig
- 46: Wälzkörperkäfigsystem
- 50: Lagerinnenraum
- 52: Schmiermittel
- 60: Axialvorsprung am ersten Innenring
- 62: Zusatzring
- 64: Radialwellendichtring
- 66: Dichtlippe des Radialwellendichtrings
- 68: Innendichtfläche
- 70: Axialverlängerung
- 72: Basiskörper des Zusatzrings
- 74: Flansch des Zusatzrings
- 76: Erste Stirnseite des Zusatzrings
- 78: Außenfläche
- 80: Abschlussscheibe
- 82: Zweite Stirnseite des Zusatzrings
- 84: Durchgangsbohrung
- 86: Pfeil; abströmendes Schmiermittel
- 88: Umgebung
- 90: Schraubbolzen
- 96: Grundkörper des Radialwellendichtrings
- 98: Steg des Radialwellendichtrings
- 100: Randabschnitt des Radialwellendichtrings
- 102: Spannelement des Radialwellendichtrings
- 104: Verstärkungsprofil des Radialwellendichtrings
- 106: Außenumfangsfläche des Zusatzrings
- 110: Erstes Dichtelement
- 112: Zweites Dichtelement
- 114: Befestigungsbohrung
- 116: Schraubverbindung
- 118: Schraubbolzen
- 120: Gewindeabschnitt
- 122: Mutter
- α: Erster Winkel
- β: Zweiter Winkel

## Patentansprüche

1. Abgedichtetes Wälzlager (10), ausgebildet als zweireihiges Kegelrollenlager (12), für eine Windkraftanlage, welches einen ersten Innenring (14), einen zweiten Innenring (16) und einen koaxial über diesen beiden Innenringen (14, 16) angeordneten Außenring (18) aufweist, bei dem radial zwischen den beiden Innenringen (14, 16) und dem Außenring (18) Wälzkörper (26, 30) in zwei Wälzkörperreihen (28, 36) angeordnet sind, bei dem die Wälzkörper (26) der ersten Wälzkörperreihe (28) auf einer ersten Innenringlaufbahn (22) sowie einer ersten Außenringlaufbahn (24) und die Wälzkörper (30) der zweiten Wälzkörperreihe (36) auf einer zweiten Innenringlaufbahn (32) und einer zweiten Außenringlaufbahn (34) abrollen, bei dem die Wälzkörper (26, 30) in zumindest einem Wälzkörperkäfig (42, 44) angeordnet sind, und bei dem ein Lagerinnenraum (50) zumindest teilweise mit einem Schmiermittel (52) befüllt ist, wobei an einem Axialvorsprung (60) des ersten Innenrings (14) radial außen ein Zusatzring (62) angeordnet ist, dass der Zusatzring (62) radial außen einen Radialwellendichtring (64) trägt, **dadurch gekennzeichnet, dass** eine radial auswärts gerichtete Dichtlippe (66) des Radialwellendichtrings (64) an einer zylindrischen Innendichtfläche (68) einer mit dem Außenring (18) verbundenen Axialverlängerung (70) radial anliegt, dass an einer stirnseitigen Außenfläche (78) des ersten Innenrings (14) eine Abschlussscheibe (80) befestigt ist, dass diese Abschlussscheibe (80) bündig an einer axial auswärts gerichteten zweiten Stirnseite (82) des Basiskörpers (72) des Zusatzrings (62) anliegt, und dass in dem Zusatzring (62) und in der Abschlussscheibe (80) mindestens eine axiale Durchgangsbohrung (84) ausgebildet ist.

2. Wälzlager nach Anspruch 1, **dadurch gekennzeichnet, dass** der Zusatzring (62) einen Basiskörper (72) mit einer viereckigen Querschnittsgeometrie aufweist, und dass an dem Basiskörper (72) ein radial nach außen gerichteter Flansch (74) ausgebildet ist, welcher mit einer axial einwärts orientierten ersten Stirnseite (76) des Basiskörpers (72) des Zusatzrings (62) bündig abschließt.

3. Wälzlager nach Anspruch 1 oder 2, **dadurch gekennzeichnet, dass** der Zusatzring (62) auf dem Axialvorsprung (60) des ersten Innenrings (14) durch Aufschrumpfen befestigt ist, oder dass die Abschlussscheibe (80) sowohl mit dem Innenring (14) als auch mit dem Zusatzring (62) durch Verschraubungen verbunden ist.

4. Wälzlager nach einem der Ansprüche 1 bis 3, **dadurch gekennzeichnet, dass** der Radialwellendichtring (64) einen ringförmigen Grundkörper (96) mit einem in radialer Richtung beweglichen Steg (98) aufweist, und dass der Steg (98) in einen umlaufenden sowie die eine Dichtlippe (66) ausbildenden Randabschnitt (100) übergeht, in dem ein ringförmiges oder mäanderförmiges Spannelement (102) aufgenommen ist.

5. Wälzlager nach Anspruch 4, **dadurch gekennzeichnet, dass** der eine Grundkörper (96) des Radialwellendichtrings (64) auf einer Außenumfangsfläche (106) des Zusatzrings (62) aufgenommen sowie zwischen der Abschlussscheibe (80) und dem Flansch (74) des Zusatzrings (62) axial eingespannt ist.

6. Wälzlager nach Anspruch 4 oder 5, **dadurch gekennzeichnet, dass** der Grundkörper (96), der Steg (98) und der Randabschnitt (100) mit der Dichtlippe (66) des Radialwellendichtrings (64) einstückig mit einem elastischen Kunststoff gebildet sind.

7. Wälzlager nach einem der Ansprüche 1 bis 6, **dadurch gekennzeichnet, dass** zwischen der Axialverlängerung (70) und dem Außenring (18) ein Dichtelement (110) angeordnet ist.

8. Wälzlager nach einem der Ansprüche 1 bis 7, **dadurch gekennzeichnet, dass** der Außenring (18) und die Axialverlängerung (70) von mindestens einer durchgehenden axialen Befestigungsbohrung (114) zur Verbindung mittels einer geeigneten Schraubverbindung (116), durchsetzt ist.

## Claims

1. A sealed roller bearing (10), designed as a two-row tapered roller bearing (12), for a wind turbine, which has a first inner ring (14), a second inner ring (16) and an outer ring (18) arranged coaxially over these two inner rings (14, 16), in which rolling elements (26, 30) are arranged in two rows of rolling elements (28, 36) between the two inner rings (14, 16) and the outer ring (18), in which the rolling elements (26) of the first row of rolling elements (28) roll on a first inner ring raceway (22) and a first outer ring raceway (24) and the rolling elements (30) of the second row of rolling elements (36) roll on a second inner ring raceway (32) and a second outer ring raceway (34), in which the rolling elements (26, 30) are arranged in at least one rolling element cage (42, 44), and in which a bearing inner space (50) is at least partially filled with a lubricant (52), wherein an additional ring (62) is arranged radially outside on an axial projection (60) of the first inner ring (14), that the additional ring (62) supports a radial shaft sealing ring (64) radially outside, **characterised in that** a radially outwardly directed sealing lip (66) of the radial shaft sealing ring (64) rests radially on a cylindrical inner sealing surface (68) of an axial extension (70) connected to the outer ring (18), **in that** a closing disc (80) is attached to an endface outer surface (78) of the first inner ring (14), **in that** this closing disc (80) rests flush on an axially outwardly directed second end face (82) of the base body (72) of the additional ring (62), and **in that** at least one axial through-hole (84) is formed in the additional ring (62) and in the closing disc (80).

2. The rolling bearing according to claim 1, **characterised in that** the additional ring (62) has a base body (72) with a quadrangular cross-sectional geometry, and **in that** a radially outwardly directed flange (74) is formed on the base body (72), which is flush with an axially inwardly oriented first end face (76) of the base body (72) of the additional ring (62).

3. The rolling bearing according to claim 1 or 2, **characterised in that** the additional ring (62) is attached to the axial projection (60) of the first inner ring (14) by shrinking, or **in that** the closing disc (80) is connected both with the inner ring (14) and with the additional ring (62) by screw connections.

4. The rolling bearing according to one of claims 1 to 3, **characterised in that** the radial shaft sealing ring (64) has an annular base body (96) with a web (98) that is movable in the radial direction, and that the web (98) merges into a circumferential edge section (100) that forms a sealing lip (66), in which an annular or meander-shaped clamping element (102) is received.

5. The rolling bearing according to claim 4, **characterised in that** the base body (96) of the radial shaft sealing ring (64) is received on an outer circumferential surface (106) of the additional ring (62) and is axially clamped between the closing disc (80) and the flange (74) of the additional ring (62).

6. The rolling bearing according to claim 4 or 5, **characterised in that** the base body (96), the web (98) and the edge section (100) with the sealing lip (66) of the radial shaft sealing ring (64) are integrally formed with an elastic plastic.

7. The roller bearing according to one of claims 1 to 6, **characterised in that** a sealing element (110) is arranged between the axial extension (70) and the outer ring (18).

8. The rolling bearing according to one of claims 1 to 7, **characterised in that** the outer ring (18) and the axial extension (70) are penetrated by at least one continuous axial fastening bore (114) for connection by means of a suitable screw connection (116).

## Revendications

1. Palier à roulement (10) étanche, conçu sous la forme d'un palier à roulement conique (12) à deux rangées, pour une éolienne, lequel comporte une première bague intérieure (14), une seconde bague intérieure (16) et une bague extérieure (18) disposée coaxialement sur lesdites deux bagues intérieures (14, 16), entre lesdites deux bagues intérieures (14, 16) et la bague extérieure (18) des corps roulants (26, 30) étant disposés en deux rangées de corps roulants (28, 36), les corps roulants (26) de la première rangée de corps roulants (28) roulant sur un premier chemin de palier à roulement de bague intérieure (22) et sur un premier chemin de palier à roulement de bague extérieure (24) et les corps roulants (30) de la seconde rangée de corps roulants (36) roulant sur un second chemin de palier à roulement de bague intérieure (32) et sur un second chemin de palier à roulement de bague extérieure (34), les corps roulants (26, 30) étant disposés dans au moins une cage de corps roulants (42, 44), et un espace intérieur de palier (50) étant au moins partiellement rempli d'un lubrifiant (52), sur une saillie axiale (60) de la première bague intérieure (14), une bague supplémentaire (62) étant disposée radialement à l'extérieur de telle sorte que la bague supplémentaire (62) porte une bague d'étanchéité d'arbre radial (64) radialement à l'extérieur, **caractérisé en ce qu'**une lèvre d'étanchéité (66) dirigée radialement vers l'extérieur de la bague d'étanchéité d'arbre radial (64) repose radialement sur une surface d'étanchéité intérieure (68) cylindrique d'une extension axiale (70) reliée à la bague extérieure (18) de telle sorte que sur une surface extérieure (78) côté frontal de la première bague intérieure (14), soit fixé un disque de fermeture (80), **en ce que** ledit disque de fermeture (80) repose à fleur sur un second côté frontal (82) dirigé axialement vers l'extérieur du corps de base (72) de la bague supplémentaire (62), et **en ce qu'**au moins un trou traversant axial (84) est formé dans la bague supplémentaire (62) et dans le disque de fermeture (80).

2. Palier à roulement selon la revendication 1, **caractérisé en ce que** la bague supplémentaire (62) comporte un corps de base (72) présentant une géométrie quadrangulaire de section transversale, et **en ce que** sur le corps de base (72) est conçue une bride (74) dirigée radialement vers l'extérieur, laquelle se termine à fleur avec un premier côté frontal (76) orienté axial ement vers l'intérieur du corps de base (72) de la bague supplémentaire (62).

3. Palier à roulement selon la revendication 1 ou 2, **caractérisé en ce que** la bague supplémentaire (62) est fixée à la saillie axiale (60) de la première bague intérieure (14) par rétraction, ou **en ce que** le disque de fermeture (80) est relié par des liaisons vissées non seulement à la bague intérieure (14) mais aussi à la bague supplémentaire (62).

4. Palier à roulement selon l'une quelconque des revendications 1 à 3, **caractérisé en ce que** la bague d'étanchéité d'arbre radial (64) comporte un corps de base (96) annulaire doté d'une entretoise (98) mobile dans la direction radiale, et ce que l'entretoise (98) passe dans une section de bord (100) périphérique et formant une lèvre d'étanchéité (66), dans laquelle est reçu un élément de serrage (102) annulaire ou en forme de méandre.

5. Palier à roulement selon la revendication 4, **caractérisé en ce que** le corps de base (96) de la bague d'étanchéité d'arbre radial (64) est reçu sur une surface périphérique extérieure (106) de la bague supplémentaire (62) et serré axialement entre le disque de fermeture (80) et la bride (74) de la bague supplémentaire (62).

6. Palier à roulement selon la revendication 4 ou 5, **caractérisé en ce que** le corps de base (96), l'entretoise (98) et la section de bord (100) sont formés d'un seul tenant avec la lèvre d'étanchéité (66) de la bague d'étanchéité d'arbre radial (64) d'une matière plastique élastique.

7. Palier à roulement selon l'une quelconque des revendications 1 à 6, **caractérisé en ce que**, entre l'extension axiale (70) et la bague extérieure (18) est disposé un élément d'étanchéité (110).

8. Palier à roulement selon l'une quelconque des revendications 1 à 7, **caractérisé en ce que** la bague extérieure (18) et l'extension axiale (70) sont traversées par au moins un trou de fixation (114) axial traversant destiné à la liaison au moyen d'une liaison vissée (116) appropriée.
